# EUROPEAN PATENT APPLICATION

(11) **EP 2 436 970 A2**
(43) Date of publication of application: **04.04.2012**
(21) Application number: 11182373.8
(22) Date of filing: 22.09.2011
(51) Int. Cl.: F21V 5/00, F21V 5/04, G02B 3/08, F21Y 101/02

(54) **Luminaire**

(30) Priority: 30.09.2010 JP 2010222265; 31.08.2011 JP 2011189947
(71) Applicant: Toshiba Lighting & Technology Corporation, Yokosuka-shi Kanagawa 237-8510 (JP)
(72) Inventor: Ogawa, Kozo, Kanagawa, 237-8510 (JP); Higuchi, Kazunari, Kanagawa, 237-8510 (JP); Komiyama, Shigetoshi, Kanagawa, 237-8510 (JP); Honda, Yutaka, Kanagawa, 237-8510 (JP); Moriyama, Takayoshi, Kanagawa, 237-8510 (JP)
(74) Representative: Sander Jakobsson, Sofia Ellinor

(57) **Abstract**

A luminaire (L) includes a plurality of light-emitting elements (LED (2)), and an optical member (3). The optical member (3) is formed a refractive area (3b1R, 3b2R, 3b3R) of a Fresnel lens (3b1, 3b2, 3b3) for each of the light-emitting elements individually and a reflective area (3b1L, 3b2L, 3b3L) of the Fresnel lens (3b1, 3b2, 3b3) between the refractive areas.

## Description

### FIELD

Embodiments described herein relate generally to a luminaire includes an optical member to control luminous intensity distribution of light emitted from a light-emitting element.

### BACKGROUND

A light-emitting element such as a light-emitting diode (LED) has been improved in output power and luminous efficiency, and becomes popular. A luminaire using an LED has been developed. A luminaire using an LED is generally controlled in luminous intensity distribution by a reflector or a lens to provide a desired luminous intensity distribution. However, if a total reflection lens is used to control luminous intensity distribution at a narrow angle, the lens thickness is increased, therefore the cost and weight are increased. There is a Fresnel lens, which is well-known as the lens for decreasing the thickness and weight of a lens. There is a known luminaire, which is controlled luminous intensity distribution of light emitted from an LED by using a Fresnel lens to decrease the thickness of an optical member.

It is necessary to increase brightness or light-emitting area of LED for increasing the amount of light of a luminaire. However, if a packing density of LED chip is increased to increase brightness, a heating value per unit area is increased, and light is likely to be glaring. There is the limits to increase a packing density of LED chip.

Further, as the ratio of a light-emitting area of LED to a Fresnel lens area is increased, an effective area contributory to control luminous intensity distribution of a Fresnel lens is reduced, and thus a flux of light emitted from an LED is not satisfactorily condensed by a Fresnel lens. If a plurality of LEDs is mounted as a light source, luminous intensity distribution of light emitted from each LED cannot be controlled by one Fresnel lens. In this case, it is necessary for a luminaire to keep a sufficient distance between an LED and Fresnel lens for controlling luminous intensity distribution by a Fresnel lens. As a result, a luminaire becomes bulky.

### BRIEF DESCRIPTION OF THE DRAWINGS

FIG. 1 is an exploded perspective view of a luminaire according to a first embodiment;
FIG. 2 is a sectional view of the luminaire shown in FIG. 1;
FIG. 3A is a plan view of an optical member shown in FIG. 1, viewed from an incident side;
FIG. 3B is a diagram showing a refractive area and a reflective area of the optical member shown in FIG. 3A;
FIG. 4 is a diagram showing luminous intensity distribution of the luminaire shown in FIG. 1;
FIG. 5A is a plan view of an optical member of a luminaire according to a second embodiment, viewed from an incident side;
FIG. 5B is a diagram showing a refractive area and a reflective area of the optical member shown in FIG. 5A;
FIG. 6 is a diagram showing luminous intensity distribution of the luminaire shown in FIG. 5A;
FIG. 7 is an exploded perspective view of a luminaire according to a third embodiment;
FIG. 8 is a perspective view of the luminaire shown in FIG. 7, with some optical member cutaway;
FIG. 9A is a plan view of the optical member shown in FIG. 7, viewed from an incident side;
FIG. 9B is a diagram showing a refractive area and a reflective area of the optical member shown in FIG. 9A;
FIG. 10 is a sectional view of a luminaire taken along lines F10 - F10 in FIG. 9A;
FIG. 11 is a sectional view of a luminaire taken along lines F11-F11 in FIG. 9A;
FIG. 12 is a plan view of an optical member of a luminaire according to a fourth embodiment, viewed from an incident side;
FIG. 13 is a plan view of an optical member of a luminaire according to a fifth embodiment, viewed from an incident side; and
FIG. 14 is a plan view of an optical member of a luminaire according to a sixth embodiment, viewed from an incident side.

### DETAILED DESCRIPTION

In general, according to one embodiment, there is provided a luminaire including an optical member with decreased thickness and weight, which controls luminous intensity distribution even if a plurality of light sources is provided. A luminaire according to an embodiment includes a plurality of light-emitting elements, and an optical member. In the optical member, a refractive area of Fresnel lens is individually formed for each light-emitting element, and a reflective area of Fresnel lens is formed between refractive areas.

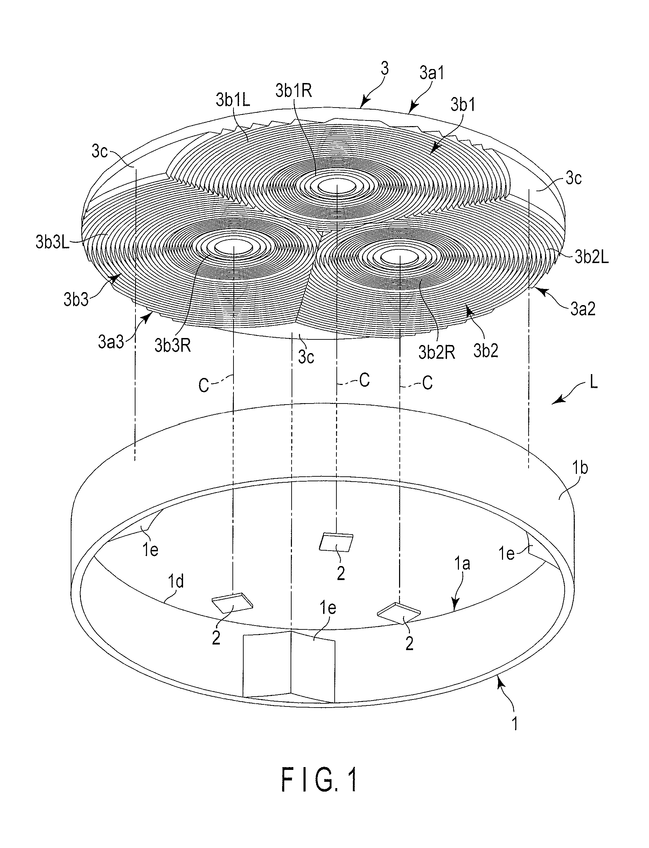

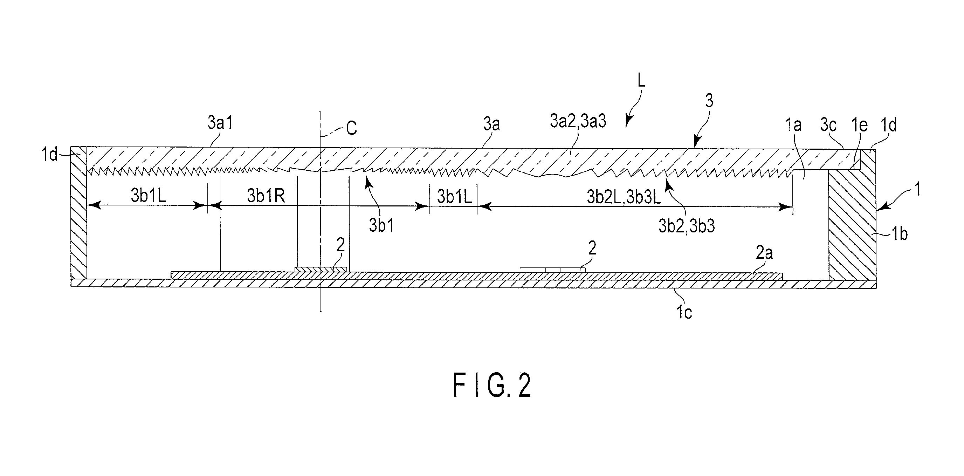

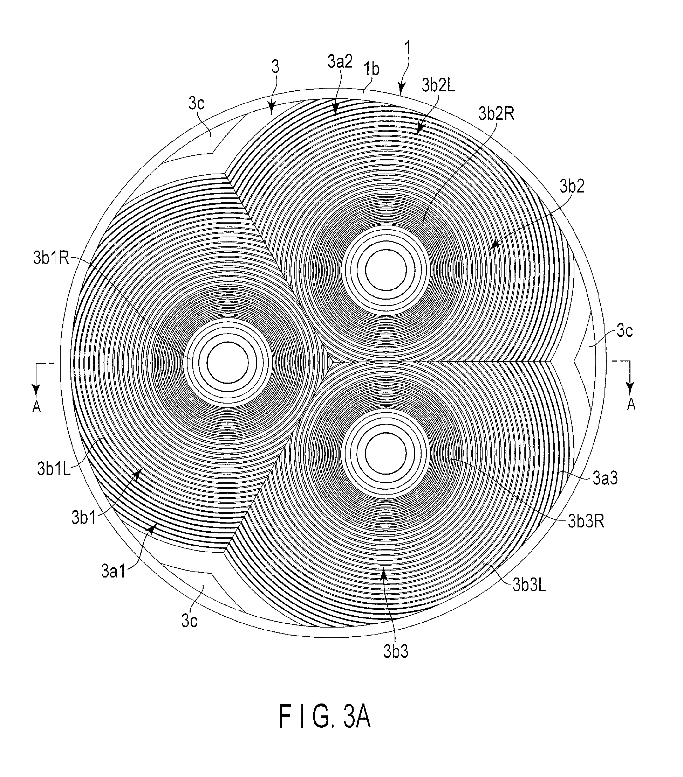

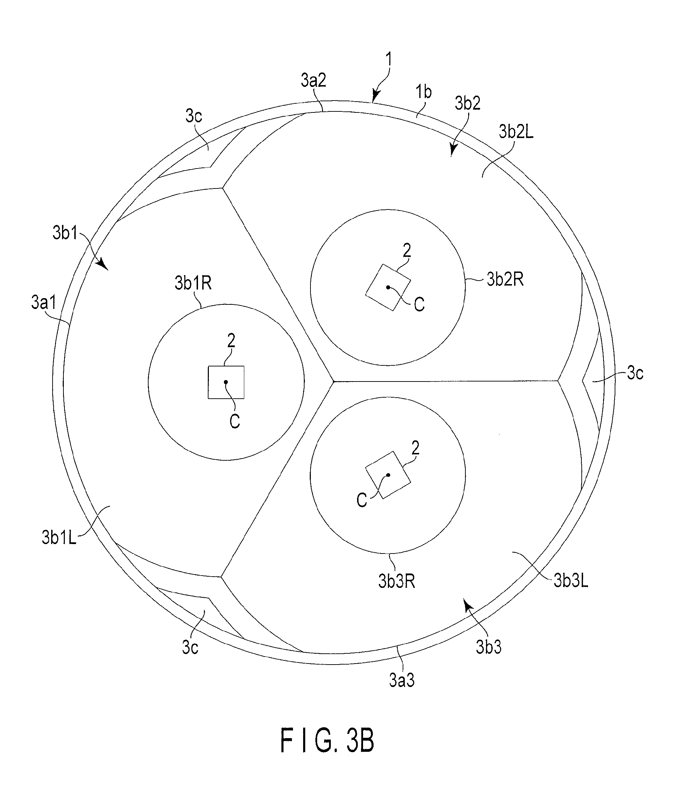

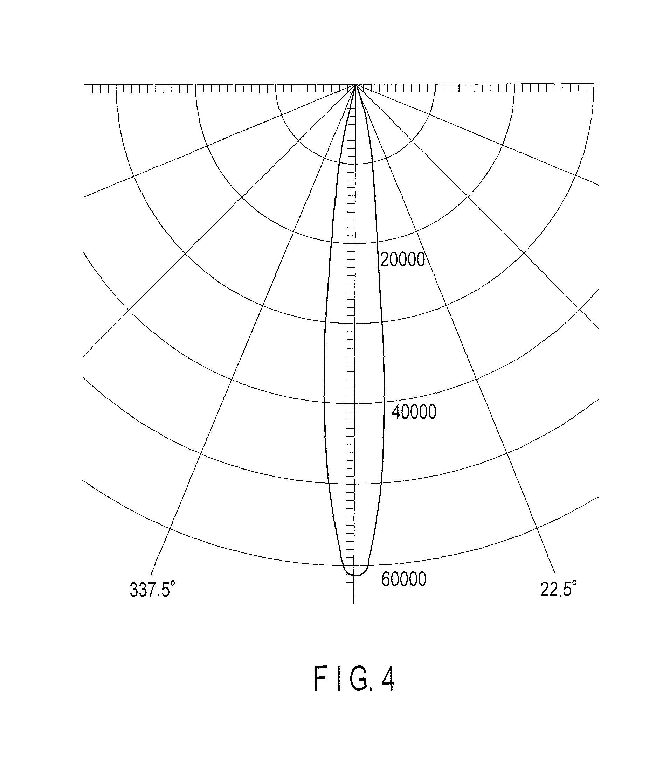

A luminaire L of a first embodiment will be explained with reference to FIGS. 1 to 4. A luminaire L is used as light with a narrow angle of luminous intensity distribution, for example, a downligh and spotlight. For convenience in explaining the embodiment, a side on which a light-emitting element is placed as a light source is called a base or bottom, and a side from which light emitted from a light source is output is called an exit side or upper end. FIG. 1 is an exploded perspective view of a luminaire L according to the embodiment. FIG. 2 is a sectional view of a luminaire L according to the embodiment. FIG. 3A is a plan view of an optical member 3 viewed from an incident side. FIG. 3B is a schematic diagram showing arrangement of a lighting portion (LED 2), and refractive areas 3b1R, 3B2R and 3b3R, and reflective areas 3b1L, 3b2L and 3b3L of Fresnel lenses 3b1, 3b2 and 3b3. FIG. 4 is a diagram showing luminous intensity distribution of the luminaire according to the embodiment. FIG. 2 is a sectional view of the luminaire taken along lines A - A in FIG. 3.

As shown in FIG. 1, the luminaire L includes a main body 1 having an opening 1a, a light-emitting diode (LED) 2 as a lighting portion placed in the main body 1, and an optical member 3 provided to cover the opening 1a of the main body 1. A bottom wall 1 of the main body 1 and a substrate 2a on which a LED 2 are mounted, is omitted in the perspective view of FIG. 1.

The main body 1 is a molded part made of aluminum alloy, for example. The opening 1a is shaped circular at the upper end of the main body 1 that is an exit side. The main body 1 has a cylindrical side wall 1b and a bottom wall 1c to clog the side on which LED 2 are placed. A mounting portion 1e to hold the optical member 3 at the edge 1d of the opening 1a is formed at three positions with equal intervals on the inside surface of the side wall 1b.

The LED 2 is mounted on the substrate 2a as shown in FIG. 2. The LED 2 includes a blue light-emitting element to generate blue light and a layer containing yellow fluorescent material to cover the blue light-emitting element, and thus the LED 2 emits white light. The substrate 2a, on which three LEDs 2 are arranged on the same circumference with equal intervals in the embodiment, is fixed to the bottom wall 1c of the main body 1. A light-emitting area of the LED 2 is shaped like a square whose one side length is about 7 mm.

The optical member 3 is made of transparent resin or translucent resin such as polycarbonate and acryl, and shaped like a circular plate. The optical member 3 is provided to cover the opening 1a of the main body 1, and has a light output part 3a to transmit the light emitted from the LED 2. The light output part 3a is divided into substantially equal three areas 3a1, 3a2 and 3a3 corresponding to each LED 2.

The optical member 3 has Fresnel lenses 3b1, 3b2 and 3b3 formed concentrically to the center of each LED 2, in areas 3a1, 3a2 and 3a3 facing the inside of the main body 1 as shown in FIG. 3A. The Fresnel lenses 3a1, 3b2 and 3b3 have refractive areas 3b1R, 3b2R and 3b3R in the central area, and reflective areas 3b1L, 3B2L and 3b3L in the outside area.

The Fresnel lenses 3b1, 3b2 and 3b3 are connected in the reflective areas 3b1L, 3b2L and 3b3L. In other words, the optical member 3 has the reflective areas 3b1L, 3b2L and 3b3L between the refractive areas 3b1R, 3b2R and 3b3R, and has a boundary of Fresnel lens 3b1, 3b2 and 3b3 between adjacent reflective areas 3b1L, 3b2L and 3b3L.

In the areas 3a1, 3a2 and 3a3 in which the Fresnel lenses 3b1, 3b2 and 3b3 are formed, the areas where the reflective areas 3b1L, 3b2L and 3b3L are formed are larger than the areas where the refractive areas 3b1R, 3b2R and 3b3R are formed. Further, the optical member 3 has three holding areas 3c at equal intervals in the circumferential direction on the periphery located on the extension of the boundary between the Fresnel lenses 3b1, 3b2 and 3b3. The optical member 3 is fastened to the main body 1 by securing the holding area 3c to the mounting portion 1e with an appropriate fastening means such as a screw.

Next, the functions and effects of the embodiment are explained.

Fresnel lens 3b1, 3b2 and 3b3 are equally formed in areas 3a1, 3a2 and 3a3. Therefore, the area 3a1 is explained as a typical example. As shown in FIG. 2, in one area 3a1, a centerline C of a concentric circle of the Fresnel lens 3b1 generally coincides with the center of LED 2. A fractional area 3b1R is formed close to the centerline C is, and reflective areas 3b1L, 3b2L and 3b3L are formed in the outside area far from the centerline C. An incident angle of light emitted from the LED 2 decreases on the outer circumference of the Fresnel lens 3b1.

A Fresnel lens is available in a refractive type and a reflective type. A refractive type Fresnel lens hardly controls luminous intensity distribution when an incident angle is small, and fails to control an angle of luminous intensity distribution of light emitted from the light output part 3a. Therefore, a Fresnel lens with a small incident angle formed in the outside area far from the centerline C is used as a reflective type Fresnel lens. This permits to control the light of LED 2 emitted to the outside area far from the centerline C as well as light emitted to the central area, and an angle of luminous intensity distribution of the luminaire L can be reduced.

In the first embodiment, the Fresnel lens 3b1 whose visual angle from the LED 2 is less than 50°, preferably less than 40° with respect to the centerline C is considered to be a refractive type 3b1R, and the Fresnel lens 3b1 with the angle of greater than 50°, preferably greater than 40° is considered to be a reflective type 3b1L. This permits a narrow angle of luminous intensity distribution, even if the distance between the LED 2 and Fresnel lens 3b1 is decreased. Further, in the embodiment, since a plurality of Fresnel lenses 3b1, 3b2 and 3b3 is connected in the reflective areas 3b1L, 3b2L and 3b3L, the area of a Fresnel lens formed in the light output part 3a can be made larger than the case that a Fresnel lens is discretely placed. Light emitted to an adjacent area can also be controlled. In other words, much of the light emitted from the LED 2 can be controlled. Therefore, the luminaire L can provide a narrow angle of luminous intensity distribution, even if the distance between the optical member 3 and LED 2 is decreased.

A holding area 3c with no Fresnel lens formed is provided at a position furthest from each LED 2, such as a place where an incident angle becomes small with respect to all Fresnel lenses 3b1, 3b2 and 3b3. Therefore, even if the mounting portion 1e is formed to overlap with the holding area 3c when the optical member 3 is attached to the main body 1, luminous intensity distribution is not influenced.

A method of securing the optical member 3 to the main body 1 is not limited to securing with a screw. A projection such as a boss or tab may be provided in the holding area 3c to fit the optical member 3 to the main body 1. The optical member may be bonded to the main body 1 in the holding area 3c.

FIG. 4 shows luminous intensity distribution of the luminaire L configured as described above. A unit of a numeric value in FIG. 4 is Candela (cd). The optical member 3 of the luminaire L meets the following conditions. Namely, the diameter of the light output part 3a is φ100mm, the Fresnel lenses 3b1, 3b2 and 3b3 formed in the area where the visual angle from the LED 2 is less than 40° are refractive types 3b1R, 3b2R and 3b3R, the Fresnel lenses 3b1, 3b2 and 3b3 formed in the area where the visual angle from the LED 2 is greater than 40° are reflective types 3b1L, 3b2L and 3b3L, the light-emitting surface of each LED 2 is shaped like a square with one side of 7mm, and the distance between the LED 2 and optical member 3 is 14mm. As seen from FIG. 4, the luminaire L can provide an angle of luminous intensity distribution, at which a half beam angle is about 10°.

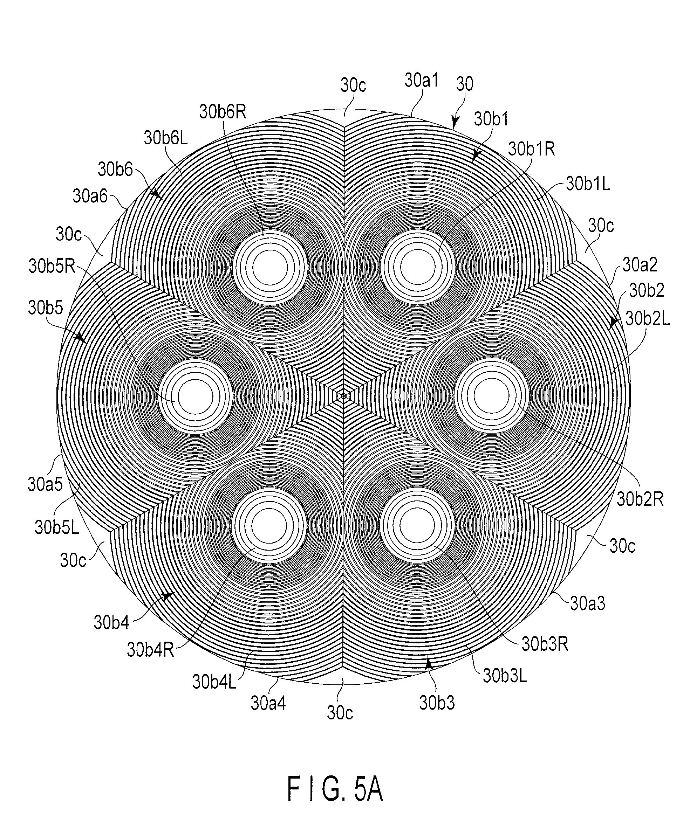

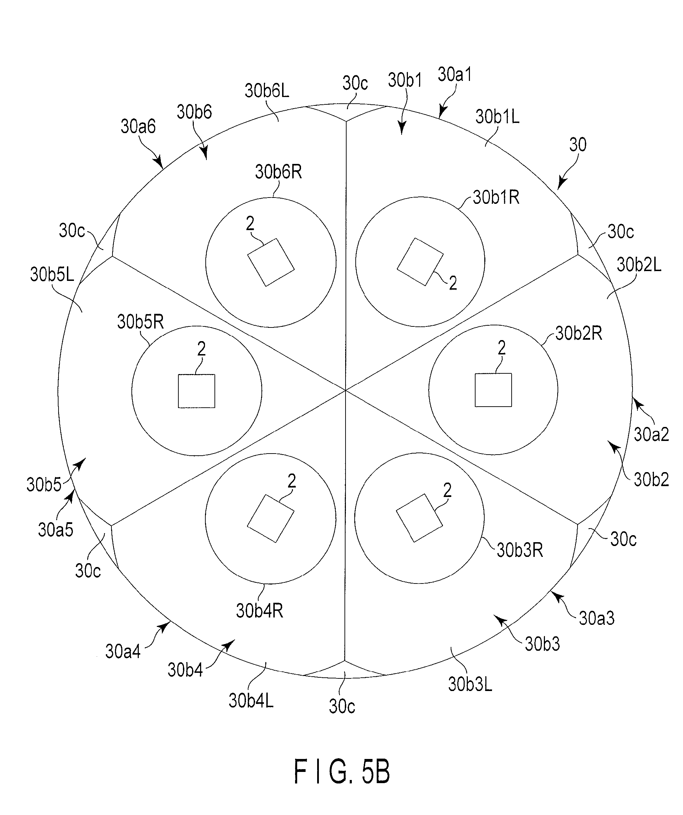

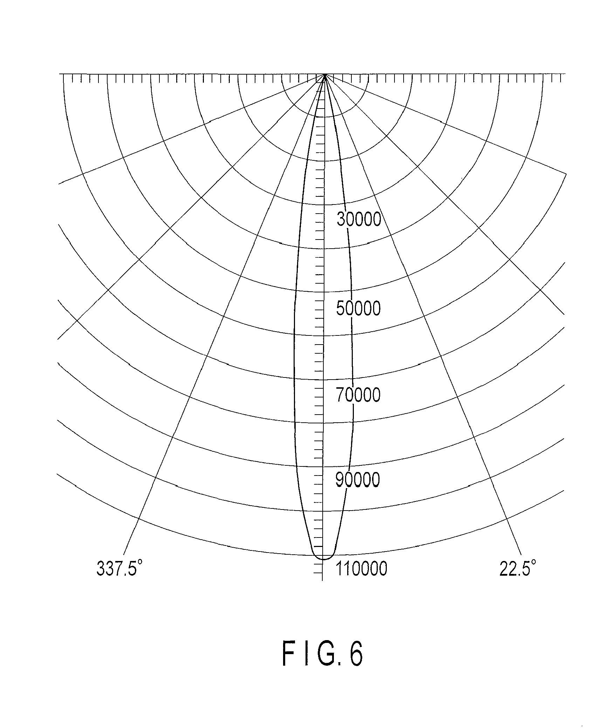

Next, a luminaire L according to a second embodiment is explained with reference to FIGS. 5A and 5B and FIG. 6. The luminaire L of the second embodiment uses more number of LEDs 2 than the luminaire L of the first embodiment. Therefore, an optical member 30 has Fresnel lenses corresponding to each LED 2. The components having the same functions as those of the luminaire L of the first embodiment are given the same reference symbols. For detailed explanation of these components, refer to the description of corresponding components and drawings in the first embodiment.

The luminaire L of the second embodiment has six LEDs 2 as shown in FIGS. 5A and 5B, and a light output part 30a of an optical member 30 is divided into six areas, 30a1, 30a2, 30a3, 30a4, 30a5 and 30a6. The areas, 30a1, 30a2, 30a3, 30a4, 30a5 and 30a6 have Fresnel lenses 30b1, 30b2, 30b3, 30b4, 30b5 and 30b6, respectively, corresponding to each LED 2.

As in the first embodiment, the center of each LED 2 coincides with the centerline C of each Fresnel lens 30b1, 30b2, 30b3, 30b4, 30b5 and 30b6 in the second embodiment. Refractive Fresnel lenses 3b1R, 30b2R, 30b3R, 30b4R, 30b5R and 30b6R are formed in the central area close to the centerline C, and reflective Fresnel lenses 30b1L, 30b2L, 30b3L, 30b4L, 30b5L and 30b6L are formed in the outside area far from the centerline C, as shown in FIG. 5B. Areas 30a1, 30a2, 30a3, 30a4, 30a5 and 30a6 are formed by dividing a circle into sectors at the same angle, and have substantially the same dimensions.

The luminaire L configured as described above has the luminous intensity distribution shown in FIG. 6. The optical member 30 of the luminaire L meets the following conditions as in the first embodiment. The diameter of the light output part 30a is φ100mm, the Fresnel lenses formed in the area where the visual angle from the LED 2 is less than 30° are refractive types 30b1R, 30b2R, 30b3R, 30b4R, 30b5R and 30b6R, the Fresnel lenses formed in the area where the visual angle from the LED 2 is greater than 30° are reflective types 30b1L, 30b2L, 30b3L, 30b4L, 30b5L and 30b6L, the light-emitting surface of each LED 2 is shaped like a square with one side of 7mm, and the distance between the LED 2 and optical member 30 is 14mm. When an angle of luminous intensity distribution of the luminaire L is measured under the above conditions, a half beam angle of the luminous intensity distribution is about 10°, as shown in FIG. 6.

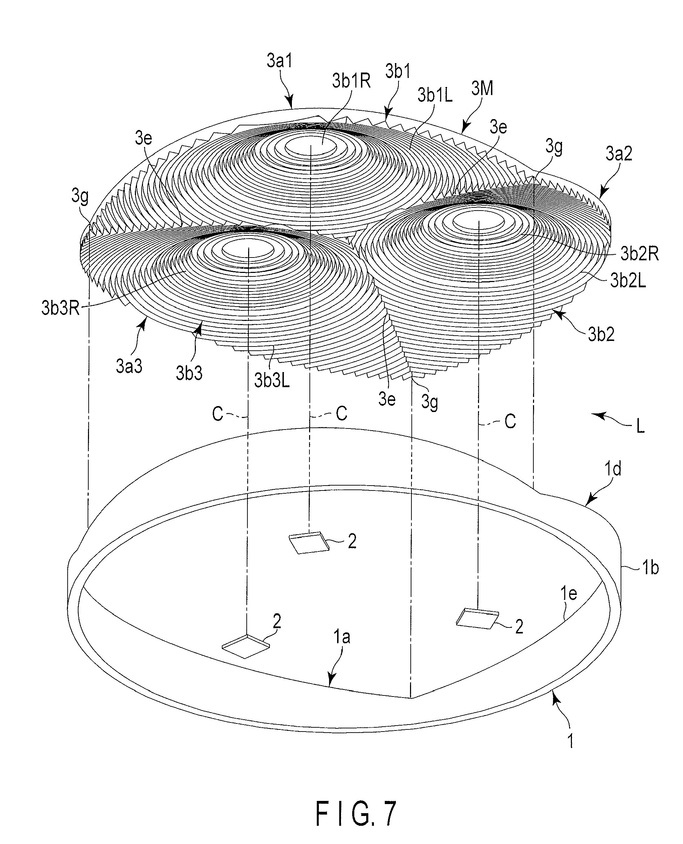

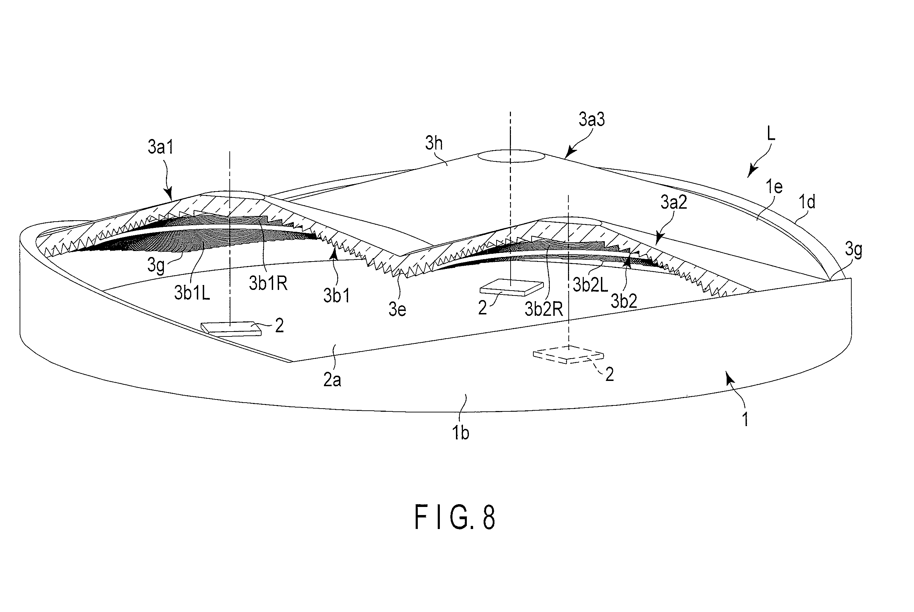

Next, a luminaire L according to a third embodiment is explained with reference to FIGS. 7 to 11. The luminaire L of the third embodiment is different from the luminaires L of the first and second embodiments in that an optical member 3M is three-dimensional as shown in FIGS. 8, 10 and 11, unlike the flat optical member 3 for the first embodiment and the flat optical member 30 for second embodiment. The components having the same functions as those of the luminaires L of the first and second embodiments are given the same reference symbols. For detailed explanation of these components, refer to the description of the first and second embodiments.

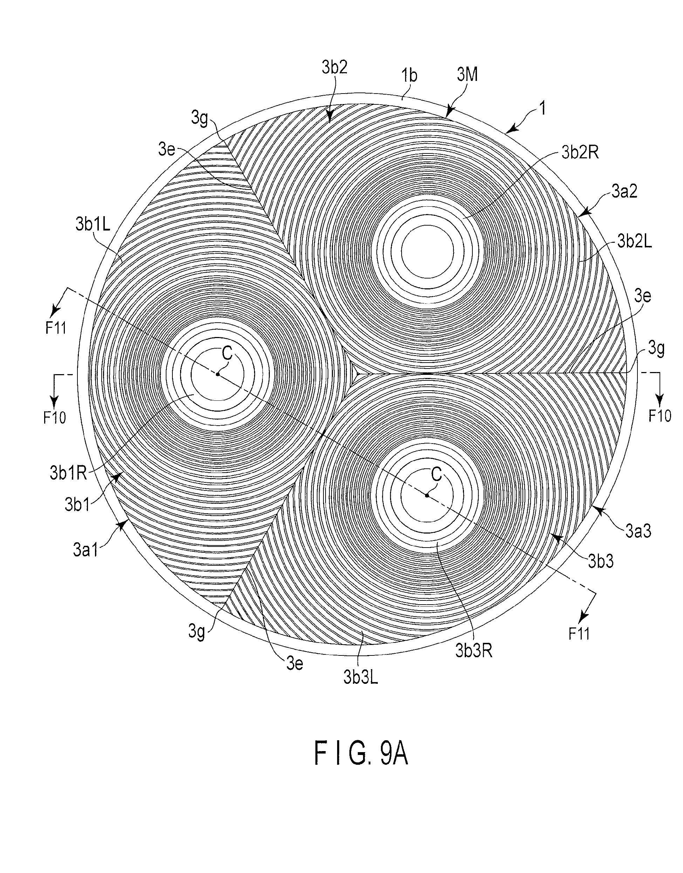

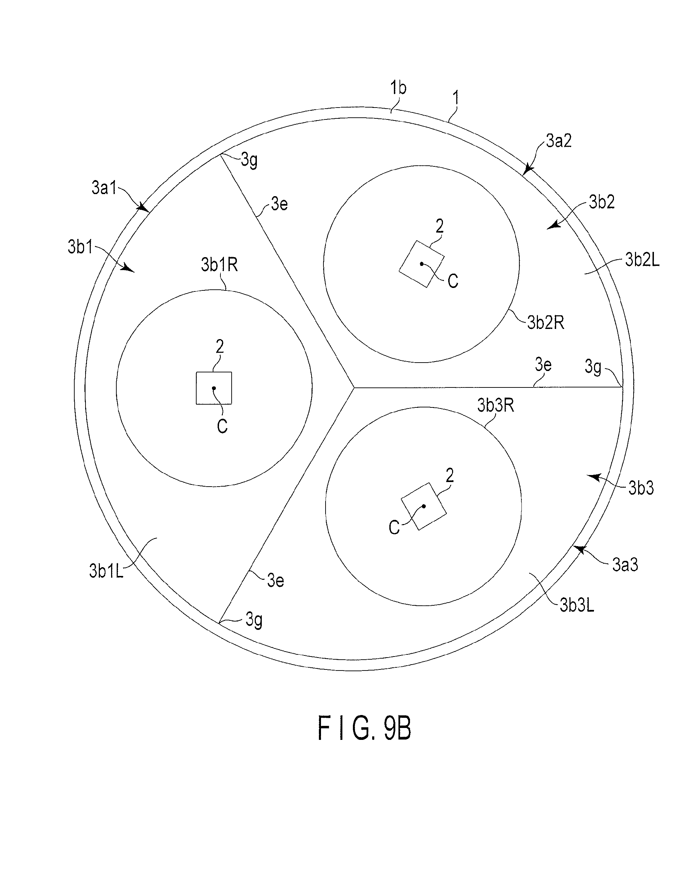

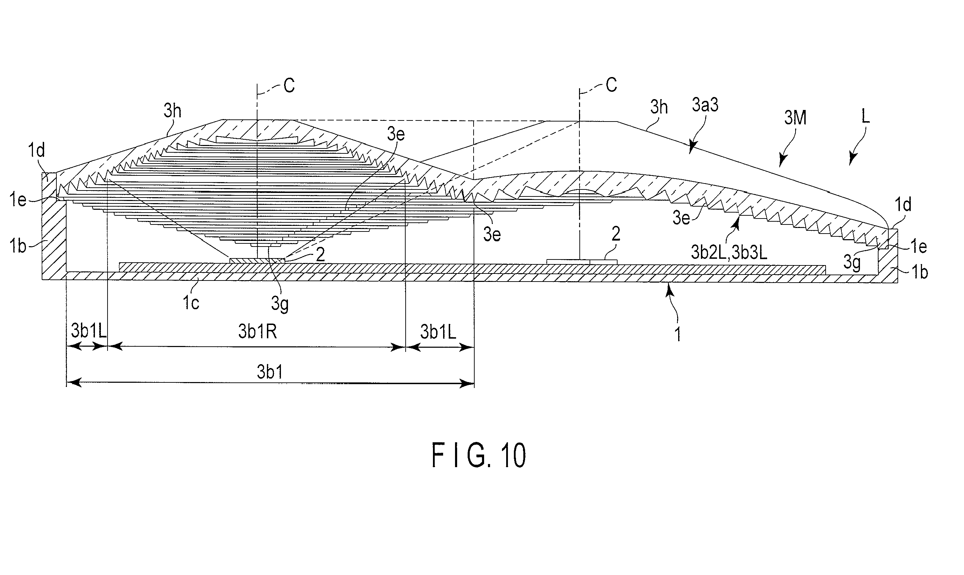

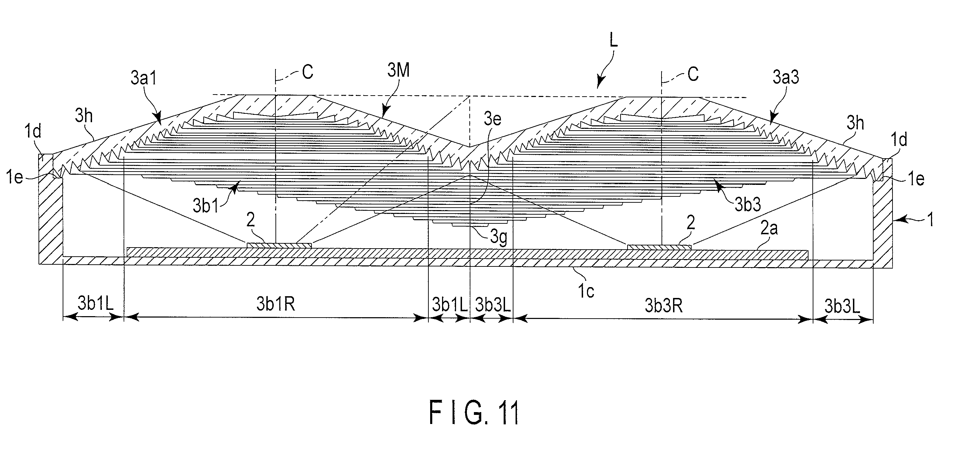

FIG. 7 is an exploded perspective view of a luminaire of the third embodiment, inclined so that the incident surface of an optical member 3M can be seen. FIG. 8 is a perspective view of a luminaire L with an optical member 3M cutaway along the plane passing the centers of two Fresnel lenses to show that the outer peripheral portion including outer peripheral edge and a joint 3e of Fresnel lenses 3b1, 3b2 and 3b3 comes close to a substrate 2a, compared with the central areas of Fresnel lenses 3b1, 3b2 and 3b3 corresponding to three LEDs 2. FIG. 9A is a plan view of the optical member 3M viewed from an incident surface side. FIG. 9B is a schematic drawing showing arrangement of refractive areas 3b1R, 3b2R and 3b3R and reflective areas 3b1L, 3b2L and 3b3L of Fresnel lenses 3b1, 3b2 and 3b3 corresponding to the LEDs 2. FIG. 10 is a sectional view of the luminaire L taken along lines F10 - F10 in FIG. 9A. FIG. 11 is a sectional view of the luminaire L taken along lines F11-F11 in FIG. 9A.

In the optical member 3M of the luminaire L of the third embodiment, Fresnel lenses 3b1, 3b2 and 3b3 are formed in the incident surface of areas 3a1, 3a2 and 3a3 divided corresponding to the LEDs 2 as shown in FIG. 9B. In the Fresnel lenses 3b1, 3b2 and 3b3, refractive areas 3b1R, 3b2R and 3b3R are formed in the central area with respect to the centerline C at the center of the LED 2, and reflective areas 3b1L, 3b2L and 3b3L are formed in the outside area.

The Fresnel lenses 3b1, 3b2 and 3b3 corresponding to adjacent LEDs 2 are connected in the reflective areas 3b1L, 3b2L and 3b3L. In other words, the refractive areas 3b1R, 3b2R and 3b3R of the Fresnel lenses 3b1, 3b2 and 3b3 are disposed across the reflective areas 3b1L, 3b2L and 3b3L.

In the luminaire L of the third embodiment, the Fresnel lenses 3b1, 3b2 and 3b3 of the optical member 3M are shaped to be convex, so that the central area is furthest from the LED 2, and the outside area becomes close to the substrate 2a as moving away from the centerline C, as shown in FIGS. 10 and 11. In other words, the peripheral portion of each Fresnel lenses 3b1, 3b2 and 3b3 is closer to the substrate 2a than the central part. In the optical member 3M, the reflective areas 3b1L, 3b2L and 3b3L of Fresnel lenses 3b1, 3b2 and 3b3 are inclined from the refractive areas 3b1R, 3b2R and 3b3R placed at the centers of reflective areas 3b1L, 3b2L and 3b3L, toward the joint 3e. In other words, the central areas of Fresnel lenses 3b1, 3b2 and 3b3 are projected to the light output direction with respect to the LED 2.

The output surface 3h of the optical member 3M is formed similarly to a shape made by combining three smooth conical surface substantially parallel to the convex of Fresnel lenses 3b1, 3b2 and 3b3 with approximately certain thickness. The output surface 3h may be formed on a surface perpendicular to the centerline C of Fresnel lenses 3b1, 3b2 and 3b3. The material cost of the optical member 3M is reduced, and the weight of the optical member 3M is decreased, by forming the output surface 3h to a shape along the contour of the incident surface of the optical member 3M, on which the Fresnel lenses 3b1, 3b2 and 3b3 are formed, as shown in FIGS. 8, 10 and 11.

The outer circumference of the optical member 3M is circular in the third embodiment, when the optical member 3M is viewed from the direction parallel to the centerline C of Fresnel lenses 3b1, 3b2 and 3b3, as shown in FIGS. 9A and 9B. The peripheral edges of the Fresnel lenses 3b1, 3b2 and 3b3 are closer to the LED 2 than the center when the optical member 3M is viewed from the direction perpendicular to the centerline C of Fresnel lenses 3b1, 3b2 and 3b3, as shown in FIGS. 10 and 11. The centerline C of each Fresnel lens 3b1, 3b2 and 3b3 is apart from the center of the optical member 3M in the radial direction.

Therefore, as seen from FIGS. 10 and 11, in the peripheral edges of Fresnel lens 3b1, 3b2 and 3b3 forming the outer circumference of the optical member 3M, a part located at the joint 3e is a near end 3g nearest to the substrate 2a, and the circumference of the optical member 3M between the near ends 3g draws an arc inclined to the substrate 2a, just like a section between near ends 3g is gradually changed parallel to the centerline C in the direction of separating away from the substrate 2a. The near end 3g is a part corresponding to the holding area 3c of the optical member 3 of the first embodiment.

The opening 1a of the main body 1 of the luminaire L is formed in three dimensions corresponding to the shape of the outer circumference of the optical member 3M. An edge 1d of the opening 1a is provided with a seat 1g to fit the outer circumference of the optical member 3M, as shown in FIGS. 10 and 11. The seat 1g is one feature of the mounting portion 1e. Therefore, instead of providing the seat 1g, it is permitted that a mounting portion 1e similar to the mounting portion 1e provided in the first embodiment is formed on the side wall of the main body, a holding area 3c is formed at the near end 3g of the optical member 3M, and they are jointed.

A rib with the height parallel to the substrate 2a may be formed in the outer circumference of the optical member 3M, along the side wall 1b of the main body 1. The height of the side wall 1b of the main body 1 may be constant, and the rigidity of the optical member 3M may be increased, when a rib is provided in the optical member 3M. Further, an engagement part, for example, a protrusion and a recess, to set a position of the optical member 3M with respect to the LED 2 may be provided in the main body 1 and optical member 3M.

In the luminaire L of the third embodiment configured as described above, the peripheral edges as a peripheral portion of Fresnel lenses 3b1, 3b2 and 3b3 formed on the incident surface of the optical member 3M are close to the LED 2. In other words, the joint 3e that is a boundary of adjacent Fresnel lenses 3b1, 3b2 and 3b3 is closer to the LED 2 than the central part, and Fresnel lenses 3b1, 3b2 and 3b3 are formed to cover the corresponding LEDs 2.

As a result, light emitted from the LED 2 having a large angle with respect to the centerline C of the Fresnel lens 3b1, such as light having an angle applied to adjacent Fresnel lenses 3b2 and 3b3 when the Fresnel lens 3b1 is flat, is also applied to the Fresnel lens 3b1, as shown in FIG. 10 and 11. In other words, since the peripheral portion of Fresnel lenses 3b1, 3b2 and 3b3 are close to the LED 2, light emitted from the LED 2 opposing the Fresnel lens 3b1 to the Fresnel lenses 3b2 and 3B3 may be controlled by the Fresnel lens 3b1.

The optical member 3M is provided to be rotationally symmetric, and thus the above explanation based on the first Fresnel lens 3b1 is applicable to second and third Fresnel lenses 3b2 and 3b3.

Light other than that emitted from the corresponding LED 2, that is, light emitted from an adjacent LED 2 is not applied to respective Fresnel lenses 3b1, 3b2 and 3b3. Therefore Fresnel lenses 3b1, 3b2 and 3b3 are easy to design. The luminaire L provided with the optical member 3M having these Fresnel lenses 3b1, 3b2 and 3b3 is improved in luminous intensity distribution.

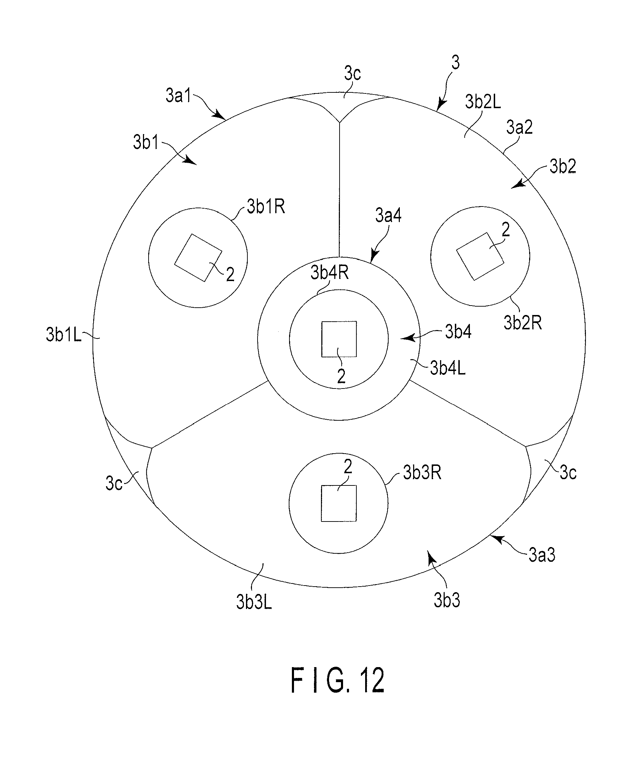

Next, an optical member 3 used in a luminaire L of a fourth embodiment is explained with reference to FIG. 12. FIG. 12 is a plan view of an optical member 3 schematically showing arrangement of refractive areas 3b1R, 3b2R, 3b3R and 3b4R and reflective areas 3b1L, 3b2L, 3b3L and 3b4L of Fresnel lenses 3b1, 3b2, 3b3 and 3b4 corresponding to LEDs 2. The components having the same functions as those of the luminaires L of the first to third embodiments are given the same reference symbols. For detailed explanation of these components, refer to the corresponding description of these embodiments.

In the fourth embodiment, an optical member 3 is formed like a disc as the optical member 3 in the first embodiment. A luminaire 4 has four LEDs 2. The fourth LED 2 is placed at the center of a triangle formed by connecting three LEDs 2 of the first embodiment as tops. The optical member 3 has areas 3a1, 3a2, 3a3 and 3a4 in a light output part 3a corresponding to each LED 2. Fresnel lenses 3a1, 3b2, 3b3 and 3b4 are formed inside a main body 1, or on an incident surface, so that a centerline C passes through the center of the LED 2. Fresnel lenses 3b1, 3b2, 3b3 and 3b4 have refractive areas 3b1R, 3b2R, 3b3R and 3b4R close to the center line C, and reflective areas of 3b1L, 3b2L, 3b3L and 3b4L at positions far from the centerline C. Therefore, in the optical member 3, reflective areas 3b1L, 3b2L, 3b3L and 3b4L are placed between refractive areas 3b1R, 3b2R, 3b3R and 3b4R of Fresnel lens 3b1, 3b2, 3b3 and 3b4 corresponding to each LED 2. In other words, the Fresnel lenses 3b1, 3b2, 3b3 and 3b4 are connected in the reflective areas 3b1L, 3b2L, 3b3L and 3b4L.

At this time, a joint 3e that is a boundary of Fresnel lenses 3b1, 3b2, 3b3 and 3b4 is provided between the reflective areas 3b1L, 3b2L, 3b3L and 3b4L to make the distance from the centerline C substantially equal. In FIG. 12, the periphery of the reflective areas 3b4L of the Fresnel lens 3b4 placed at the center of the optical member 3, that is, a joint 3e adjoined to the other three Fresnel lenses 3b1, 3b2 and 3b3 is circular. The reflective area 3b4L of the Fresnel lens 3b4 may be formed in triangular.

When a seventh LED 2 is placed at the center in addition to six LEDs 2 of the luminaire L in the second embodiment, the periphery of a Fresnel lens corresponding to the seventh LED 2 may be formed in circular or hexagonal.

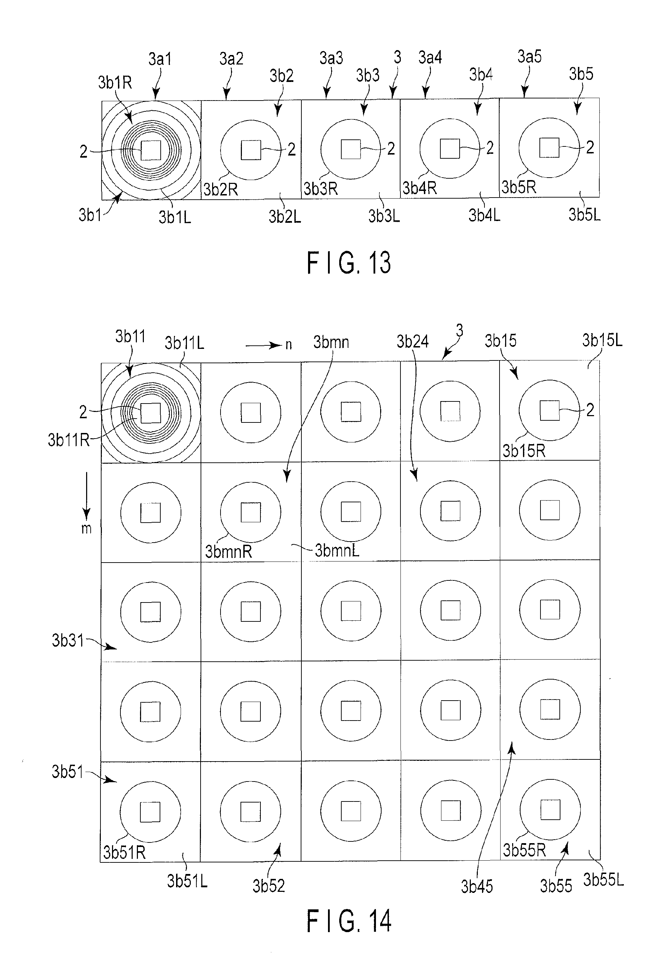

Next, an optical member 3 used in a luminaire L of a fifth embodiment is explained with reference to FIG. 13. FIG. 13 is schematic drawing showing an optical member 3 formed corresponding to five LEDs 2 arranged in line. The optical member 3 has Fresnel lenses 3b1, 3b2, 3b3, 3b4 and 3b5 corresponding to each LED 2 on the incident surface. The optical member 3 has reflective areas 3b1L and 3b2L (3b2L and 3b3L; 3b3L and 3b4L; 3b4L and 3b5L) between a refractive area 3b1R (3b2R, 3b3R, 3b4R) of Fresnel lens 3b1 (3b2, 3b3, 3b4) and a refractive area 3b2R (3b3R, 3b4R, 3b5R) of Fresnel lens 3b2 (3b3, 3b4, 3b5), corresponding to adjacent LEDs 2. The Fresnel lenses 3b1, 3b2, 3b3, 3b4 and 3b5 are connected in the reflective areas 3b1L, 3b2L, 3b3L, 3b4L and 3b5L.

The leftmost Fresnel lens 3b1 in FIG. 13 is concretely illustrated, and is the same as the other Fresnel lenses. The number of LEDs 2 is not limited to five. A required number of LEDs 2 may be aligned according to a desired length. At this time, Fresnel lenses may be continuously formed in one according to the number of LEDs 2. As the Fresnel lenses have the same shape, they may be formed and arranged one by one, or a plurality of Fresnel lenses may be formed as a unit.

Next, an optical member 3 used in a luminaire L of a sixth embodiment is explained with reference to FIG. 14. In the optical member 3, Fresnel lenses 3b11 to 3bmn are arranged corresponding to LEDs 2 arranged in a matrix of m rows and n columns. FIG. 14 schematically shows an optical member 3, in which Fresnel lenses 3b11 to 3b55 are arranged in 5 rows and in 5 columns. Reference symbols are given only a few located at a corner, and is omitted for the other Fresnel lenses in FIG. 14.

Similar to other embodiments, in the optical member 3 of the sixth embodiment, a reflective area 3bmnL is placed between refractive areas 3bmnR of adjacent Fresnel lens 3bmn. In other words, adjacent Fresnel lenses 3b11 to 3bmn are connected in a reflective area 3bmnL.

An optical member 3, in which the periphery of each Fresnel lens corresponding to an LED 2 is formed close to a substrate 2a, is not limited to the third embodiment, and is applicable to the second embodiment and fourth to sixth embodiments. In other words, in the optical member 3 (30) in the second, fourth, fifth and sixth embodiments, a Fresnel lens may be shaped as a three-dimensional dome with the periphery or the joint 3e closer to a substrate 2a than a central part.

Following embodiments are also included in the present invention.
[1] A luminaire comprising:
   a plurality of light-emitting elements; and
   an optical member configured to be provided with a light output part to transmit light emitted from the light-emitting element, in which a Fresnel lens concentric with the center of each light-emitting element is formed in each of areas divided substantially equal, the Fresnel lens configured to have a refractive area in a central and a reflective area in an peripheral, the area configured to be connected to each other in the reflective area at a boundary of the Fresnel lens.
[2] The luminaire according to [1], wherein the reflective area has a size which is larger than a size of refractive type in each area where a Fresnel lens is formed in the optical member.
[3] The luminaire according to [1], wherein the optical member comprises a holding area in which a Fresnel lens is not formed, the holding area is configured to be formed in the outer circumference of the extension of a boundary of Fresnel lenses.
   While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A luminaire (L) **characterized by** comprising:
a plurality of light-emitting elements (LED (2)); and
an optical member (3; 30; 3M)configured to be formed a refractive area (3b1R, 3b2R, 3b3R) of a Fresnel lens (3b1, 3b2, 3b3) for each of the light-emitting elements individually and a reflective area (3b1L, 3b2L, 3b3L) of the Fresnel lens (3b1, 3b2, 3b3) between the refractive areas (3b1R, 3b2R, 3b3R).

2. A luminaire (L) **characterized by** comprising:
a plurality of light-emitting elements (LED (2)); and
an optical member (3; 30; 3M) configured to be formed a Fresnel lens (3b1, 3b2, 3b3) comprising a refractive area (3b1R, 3b2R, 3b3R) at the center and a reflective area (3b1L, 3b2L, 3b3L) in the periphery of the refractive area (3b1R, 3b2R, 3b3R) for each of the light-emitting elements, the Fresnel lens (3b1, 3b2, 3b3) configured to connect adjacent Fresnel lenses (3b1, 3b2, 3b3) in the reflective area (3b1L, 3b2L, 3b3L).

3. The luminaire (L) of Claim 1 or 2, **characterized in that**
the reflective area (3b1L, 3b2L, 3b3L) is larger the refractive area (3b1R, 3b2R, 3b3R).

4. The luminaire (L) according to any one of Claims 1 to 3, **characterized in that**
the optical member (3; 30; 3M) configured to be provided with a holding area (3c) in a joint (3e) of the Fresnel lenses (3b1, 3b2, 3b3) adjoined in the peripheral portion.

5. The luminaire (L) of Claim 4, **characterized in that**
the optical member (3M) configured to be provided with the Fresnel lens (3b1, 3b2, 3b3) on an incident surface facing the light-emitting elements respectively, and
each of the Fresnel lens (3b1, 3b2, 3b3) is configured to be formed a peripheral portion which is protrude than the center portion toward the light-emitting portion.

6. The luminaire of Claim 5, **characterized in that**
the reflective area (3b1L, 3b2L, 3b3L) is inclined toward the joint (3e) from the refractive area (3b1R, 3b2R, 3b3R) placed at the center of the reflective area (3b1L, 3b2L, 3b3L).

7. The luminaire of Claim 5 or 6, **characterized in that**
the optical member (3M) is provided with an output surface substantially parallel along the contour of the incident surface on which the Fresnel lens (3b1, 3b2, 3b3) is formed for each of the light-emitting elements.
